# EUROPEAN PATENT APPLICATION

(11) **EP 0 907 277 A1**
(43) Date of publication of application: **07.04.1999**
(21) Application number: 97650039.7
(22) Date of filing: 02.10.1997
(51) Int. Cl.: H04L 29/06

(54) **A data communication and processing system**

(71) Applicant: Branescu Limited, Dublin 8 (IE)
(72) Inventor: Hickey, Patrick, Celbridge, County Kildare (IE); Haslam, Bernard, Malahide, County Dublin (IE)
(74) Representative: O'Connor, Donal Henry

(57) **Abstract**

A system has a large number of clients (2) which asynchronously connect with a host (18) via a gateway (16). Connection to the gateway (16) is via a modem bank which multiplexes the incoming signals. A single request message is transmitted from the client (2). A gateway service manager (16(b)) divides the data block into a number of data segments and adds timing, requests, and reply headers to each data segment to create a number of request messages corresponding to the initial request message. A gateway service provider (16(c)) links up with a service request router in the host (18) which in turn routes the messages to the relevant service request servers in the host (18) from which a reply is generated. On the return path, the host (18) includes the timing header and the request and response headers to a reply data segment which is simply the data segment of one of the incoming messages with the response over-written.

## Description

The invention relates to a data communication and processing system comprising a large number of client data processing terminals which are distributed over a wide area and asynchronously gain remote access to a central host in real time.

European Patent Specification No. EP14313A1 (IBM) describes such a system in which issue identification data is used for communicating with the host. European Patent Specification No. EP0446500A1 (Gorog) describes an automated order and payment system in which the clients optically scan identification code information and a central computer system verifies the message contents with reference to a database. EP0630141A2 (Sharma et al) describes an arrangement in which there are speech compression algorithms for communication. British Patent Specification No. GB2286264A (Noiram Ltd.) describes a system having a build processor which monitors a data request queue and handles a trigger file for each data request flag in the queue to build a transfer package.

While the above systems are all apparently quite effective for their particular applications, there is a need for an improved communication and data processing system which allows handling of large volumes of incoming client messages, processing of the messages in real time at the host, and delivery of reply messages within a short period of time. More particularly, there is a need for improved data integrity processes where the data volumes are high - both in terms of the number of messages and the sizes of the messages. There is also a need for message-handling processes which provide a faster response time. Both of these technical requirements are very important from a business viewpoint.

According to the invention, there is provided a data communication and processing system comprising a central data processing host and a plurality of remote data processing clients comprising means for asynchronously establishing communication with the host, wherein:
the client comprises a client application comprising means for receiving data from a user interface, for processing the data and for writing processed data to a data block mapped in memory;
the client comprises a client server requester comprising means for creating a message from the data block by appending to it:-
   a gateway header with gateway communication parameters;
   a timing header of data frames for later insertion of timing data;
   request control data; and
   reply control data frames for later insertion of reply control data,
the client comprises means for writing a client transmission time stamp to the timing header and subsequently transmitting the request message via a communications network to a gateway;
the gateway comprises a service manager comprising means for reading and verifying the gateway parameters and splitting up the data block into a plurality of data segments and adding to each data segment the timing, request, and response headers to create a plurality of request messages corresponding to the initial request message;
the gateway comprises a service provider comprising means for establishing a link with the host;
the host comprises a service router to which a link is established by the gateway service provider, the service router comprising means for routing received messages to servers on the host, the host servers comprising means for processing the data segments and generating a single response message corresponding to the plurality of received request messages relating to one request, the response message comprising a data segment containing response data, the timing header and the response header; and
the gateway comprises means for operating in a bi-directional manner to route the response message back to the originating client.

In one embodiment, the client comprises a low-level communication layer which comprises means for adding a security and data integrity header to each outgoing request message.

Preferably, the gateway comprises a remote access service comprising means for initially receiving request messages from the clients and for automatically verifying the data in the security header and for removing the security header.

In one embodiment, the gateway access service comprises means for adding a time stamp to indicate the time of receipt of the request message by the gateway.

In another embodiment, the gateway service manager comprises means for removing the gateway header after reading its contents.

In the latter embodiment, the gateway service manager preferably comprises means for storing the data of the gateway header for later processing.

In one embodiment, the client comprises means for determining a unique client machine serial number from a hardware security device connected to the client machine and for writing the serial number to the request header.

The invention will be more clearly understood from the following description of the some embodiments thereof, given by way of example only with reference to the accompanying drawings, in which:-
Fig. 1 is a schematic overview of a data communication and processing system of the invention;
Fig. 2 is a diagrammatic representation of timing of message communication in the system;
Fig. 3 is a more detailed diagram illustrating the sub-structures of parts of the system; and
Figs. 4(a) to 4(h) inclusive is a sequence of diagrams illustrating the messages and the manner in which they are processed at various stages in the
system.

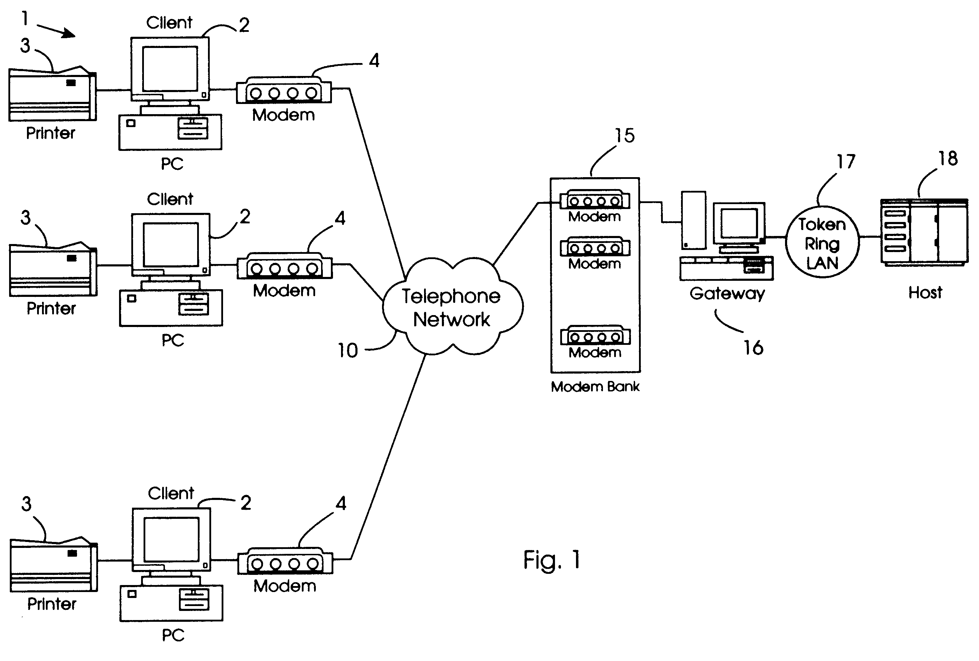

Referring to Fig. 1, there is shown a data communication and processing system 1 of the invention. The system 1 comprises a large number of client data processing terminals 2, hereinafter simply referred to as "clients". The clients are located over a wide area and could, for example, be located in vehicle dealerships throughout a country. Each client 2 comprises a microcomputer programmed to carry out the communication and processing tasks required. Each client 2 is connected to a printer 3 for printing of documents responsive to the data processing. Further, each client 2 is connected to a modem 4, each of which provides asynchronous dial-up connections through a PSTN 10 to a central modem bank 15. The modem bank 15 is connected to a gateway 16, which is in turn connected by a token ring local area network (LAN) to a host 18. In this embodiment, the gateway 16 comprises a microcomputer and the host 18 is of the AS/400™ type.

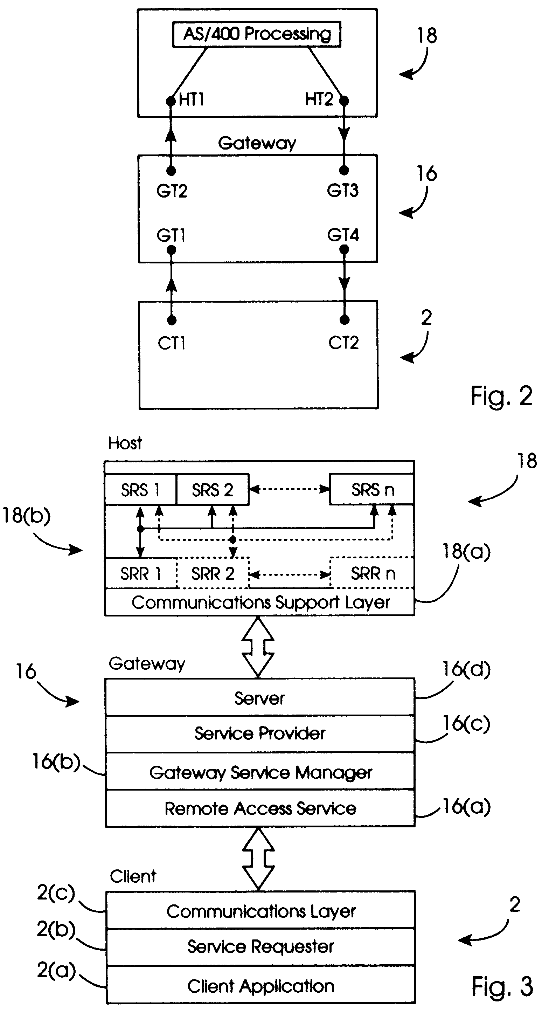

Referring now to Fig. 2, the major components of the system 1 which are involved in the communication and processing of messages are illustrated. These are the client 2, the gateway 16 and the host 18. Each client 2 receives and processes data such as data in relation to purchasing of a vehicle by a customer. It generates a message which is transmitted at time CT1 to the gateway 16. It is received at time GT1 at the gateway 16, which re-transmits it at time GT2 to the host 18. The message is received at time HT1 in the host, the data is processed, and a reply is transmitted back at time HT2. This reply is received at time GT3 in the gateway 16 and is re-transmitted at time GT4 back to the sending client, at which it is received at time CT2. There is a considerable level of data processing at the client and host ends of this path, the gateway 16 providing communication functions to ensure message security and correct routing. The role of the gateway 16 is particularly important as a large number of messages are simultaneously handled in a bi-directional manner.

Referring now to Fig. 3, the sub-structure of the components of the system 1 is illustrated. Each client 2 comprises a client application 2(a) which performs the data processing, such as processing of a credit request for purchase of a vehicle. A lower-level service request 2(b) controls communication and a still lower-level communications layer 2(c) performs the low-level communication with the gateway 16.

The modem bank 15 receives all messages and multiplexes them for the gateway 16. The gateway 16 comprises a remote access service 16(a) which is a low-level communications layer. A gateway service manager 16(b) performs message processing to ensure integrity of the message transfer. A service provider 16(c) and an associated server 16(d) together route all of the received client messages to the host 18 and receive the host responses.

The host 18 comprises a communications support layer 18(a). The layer 18 uses an Advanced Program to Program Communication (APPC) protocol to process messages received from the server 16(d) in an Inter-Process Communication (IPC) file. The messages are processed by various server request server processors (SRS). The messages are routed to appropriate SRSs by server request routers (SRRs). The SRRs and the SRSs are in a host layer 18(b).

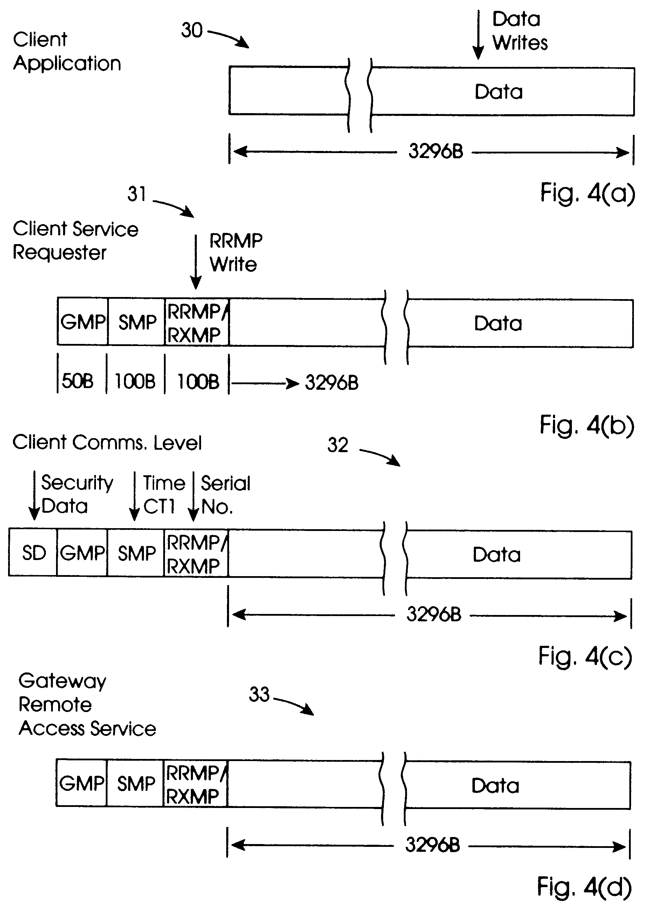

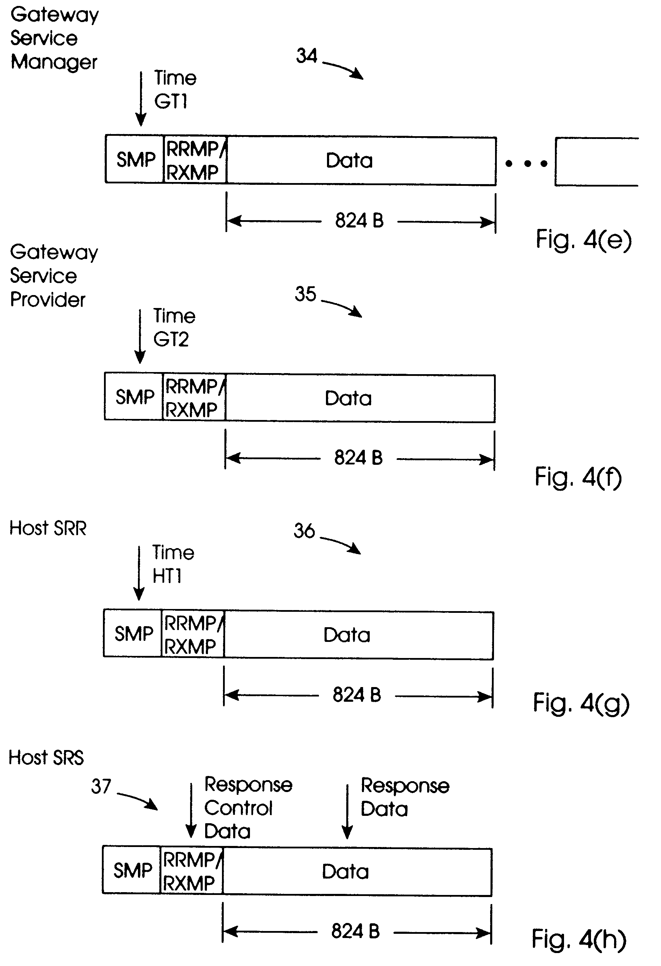

The manner in which the various parts of the system 1 operate is best illustrated by referring to the path of a message from a client 2 through the gateway 16 and the host 18 and back to the originating client 2, as illustrated in Fig. 4. The client application 2(a) receives data to be processed. This may be the personal and vehicle details for a proposed purchase of a vehicle. The client application 2(a) has a number of different dataset types, the relevant one being selected upon detection of particular data items. Each dataset type will have a different size of mapped memory which is used during the client application data processing. In this example, a dataset 30 shown in Fig. 4(a) has a size of 3296 Bytes.

When all writes have been performed, the application 2(a) passes control over to the service requester 2(b), which adds the following headers:-
GMP - gateway message portion,
SMP - statistics message portion, and
RRMP/RXMP - router request message portion/router response message portion.

This combination of headers is particularly effective at ensuring correct routing, data integrity, and data security in the many-to-one client-to-host leg of the communications cycle. The GMP indicates the number of data bytes, the number of bytes required for the host's reply, the type of service requested, and a service return code. The SMP header is blank at this stage and includes data frames for insertion of the time values CT1 to CT2 as illustrated in Fig. 2.

The RRMP header includes:-
- a function code which identifies the function of the client application which initiated the message,
- a request code which identifies the server program of the host 18 which is to be called by the gateway server 16(d),
- a unique "Dongle" serial number for the client 2,
- a user identifier,
- the maximum number of database records required for the transaction.

The RXMP header is empty at this stage, but includes data frames for writing of the following data by the relevant SRS of the host 18:-
- a flag indicating success or failure of the request,
- a flag indicating end of data for a multiple-message response, where appropriate,
- error text if the flag indicates failure,
- the client unique serial number.

All of the header include additional redundant bytes for use in modification of the message structure without affecting other headers.

Once control has been passed to the service requester 2(b) the client application 2(a) enters an idle state waiting for a response. The service requester 2(b) checks the data in the data portion of the message and if there is no data the current connection is terminated by closing all open sockets. It then checks if there is a currently connected socket to the gateway 16 and if there is, it will be used. The service requester 2(b) also calls the communication layer 2(c) to dial the gateway 16 and log into it. Once a socket has been opened the service requester 2(b) goes into an idle state and waits for a message from the communications layer 2(c) indicating that the data can be sent to the gateway 16. When this is received, the service requester 2(b) writes the fully formatted message to the socket.

The function of the communications layer 2(c) is to provide the low-level connectivity with the gateway 16 via the modem bank 15 using a TCP/IP protocol. This layer uses a scripting language and a dialler to automate the basic tasks. These scripts initialise the connected modem, dial the gateway 16, log in to the gateway 16 and thus establish a TCP/IP protocol session. The layer 2(c) is also capable of disconnecting after expiration of a set period of inactivity.

Another function of the communications layer 2(c) is to add a security and integrity data portion SD to the message 31 to provide the message 32 shown in Fig. 4(c). This includes a low-level security code and the date of transmission. The layer 2(b) also writes the time CT1 to the RRMP header.

The message is received by the remote access service 16(a) of the gateway 16, which services the modem rack 15. This allows a number of asynchronous dial-up connections to be made by a number of clients 2. It allows the client 2 to establish a pier-to-pier protocol (PPP) connection after a successful password authorisation protocol (PAP) log in. It then provides the link between the clients TCP/IP protocol to the TCP/IP communications protocol layer of the server 16(d). When the signal is received, as indicated in Fig. 4(d), the SD header is validated and them deleted from the message to provide a message 33.

The gateway service manager 16(b) creates a socket, referred to as a listening socket and goes into an idle state waiting for an incoming connection message from the socket process indicating that there is data in the listening socket to be received. It starts a new application thread referred to as a socket controller process which will accept the incoming socket connection from the listening socket into a new socket. The gateway service manager 16(b) reads the message parameters from the GMP header and then deletes this header. It also writes the time stamp GT1 to the SMP header before passing control to the gateway service provider 16(c). Another important operation of the gateway service manager 16(b) is splitting of the data segment into four segments of equal length - 824B. It then adds the SMP and RRMP/RXMP headers to each segment to provide four messages 34 corresponding to the single message 33 which was received. The socket controller then passes the message and goes into an idle state and waits for a message from the socket process indicating that a message has been successfully received.

Control is then passed to the gateway service provider 16(c) which determines from the RRMP header which service is required. The service provider 16(c) manages the communications links between the gateway 16 and the server 18. As indicated in Fig. 4(f) it applies a time stamp GT2 to the SMP header to provide a message 35 shown in Fig. 4(f), which is routed to the host via the server 16(d).

The communication layer 18(a) of the host 18 is based on the OS/400™ operating system. Within the host 18, a service request router (SRR) verifies the serial number and ID frames in the RRMP header and writes the time HT1 to the SMP header to provide a message 36. It then routes each message 36 to a server request server (SRS). The data segment of each message is processed by the SRS, which generates a reply by over-writing its response into the data segment of the message and also writes response control data to the RXMP header.

The response is then routed back to the client 2 in the opposite direction with the time stamps HT2, GT3, GT4 and CT2 being added to the SMP header on the return path. The SRS sequences the four related messages 36 for each request and generates only one reply message 37 containing the headers SMP and RXMP and one 824B data segment. The reply is thus much shorter than the request and the headers GMP and SD are not generated. There is also of course no splitting of data segments on the return log.

Because the various parts of the system 1 may not have their clocks perfectly synchronised, a statistics analysis is carried out by the host 18 using the time stamps which have been added to the SMP header in order to monitor communication times. The following table illustrates some of the calculations which are performed for statistics analysis.

| **Duration** | **Calculation** |
|---|---|
| Total Response Time | CT2-CT1 |
| Gateway Forwarding Time (Out-bound) | GT2-GT1 |
| Gateway Forwarding Time (In-bound) | GT4-GT3 |
| Gateway Forwarding Time (Total) | (GT2-GT1) + (GT4-GT3) |
| Client Gateway Transmission Time (Total -including any dial-up connection establishment time. | (CT2-CT1) - (GT4-GT1) |
| Client Gateway Transmission Time (Average for single direction) | ((CT2-CT1) - (GT4-GT1))/2 |
| Host Processing Time | HT2-HT1 |
| Gateway to Host Transmission Time (Total) -including any new APPC conversation establishment time. | (GT3-GT2) - (HT2-HT1) |
| Client to Host Transmission Time (Average for single direction) | ((GT3-GT2) - (HT2-HT1))/2 |

It will be appreciated that the invention provides very comprehensive control of message transfer in a many-to-one outgoing path and a one-to-one return path. The client application creates a main block of data of fixed size in a simple manner. The client service requester 2(b) adds comprehensive headers both to allow routing to the gateway via the modem bank 15, and also for after the data block has been split up into four segments. Headers are immediately deleted after they have served their functions. By splitting the data block, the host 18 can process the data in units which are of a single, fixed and relatively small size. This allows distribution of the processing in the host 18 when required - the SMP and RRMP/RXMP headers ensuring that the full response processing is co-ordinated correctly. The time stamps allow immediate analysis of timing - both for current-message control and for analysis of patterns to identify faults at an early stage. These features all help to ensure integrity of the data and also a fast response in an environment in which there are many simultaneous messages.

## Claims

1. A data communication and processing system comprising a central data processing host and a plurality of remote data processing clients comprising means for asynchronously establishing communication with the host, wherein:
the client comprises a client application comprising means for receiving data from a user interface, for processing the data and for writing processed data to a data block mapped in memory;
the client comprises a client server requester comprising means for creating a message from the data block by appending to it:-
a gateway header with gateway communication parameters;
a timing header of data frames for later insertion of timing data;
request control data; and
reply control data frames for later insertion of reply control data,
the client comprises means for writing a client transmission time stamp to the timing header and subsequently transmitting the request message via a communications network to a gateway;
the gateway comprises a service manager comprising means for reading and verifying the gateway parameters and splitting up the data block into a plurality of data segments and adding to each data segment the timing, request, and response headers to create a plurality of request messages corresponding to the initial request message;
the gateway comprises a service provider comprising means for establishing a link with the host;
the host comprises a service router to which a link is established by the gateway service provider, the service router comprising means for routing received messages to servers on the host, the host servers comprising means for processing the data segments and generating a single response message corresponding to the plurality of received request messages relating to one request, the response message comprising a data segment containing response data, the timing header and the response header; and
the gateway comprises means for operating in a bi-directional manner to route the response message back to the originating client.

2. A system as claimed in claim 1, wherein the client comprises a low-level communication layer which comprises means for adding a security and data integrity header to each outgoing request message.

3. A system as claimed in claim 2, wherein the gateway comprises a remote access service comprising means for initially receiving request messages from the clients and for automatically verifying the data in the security header and for removing the security header.

4. A system as claimed in claim 3, wherein the gateway access service comprises means for adding a time stamp to indicate the time of receipt of the request message by the gateway.

5. A system as claimed in any preceding claim, wherein the gateway service manager comprises means for removing the gateway header after reading its contents.

6. A system as claimed in claim 5, wherein the gateway service manager comprises means for storing the data of the gateway header for later processing.

7. A system as claimed in any preceding claim, wherein the client comprises means for determining a unique client machine serial number from a hardware security device connected to the client machine and for writing the serial number to the request header.

8. A system substantially as hereinbefore described with reference to and as illustrated in the accompanying drawings.
